# EUROPEAN PATENT SPECIFICATION

(11) **EP 2 461 892 B1**
(45) Date of publication and mention of the grant of the patent: **06.05.2015**
(21) Application number: 09777629.8
(22) Date of filing: 04.08.2009
(51) Int. Cl.: C04B 7/36, B01D 53/62

(54) **METHOD FOR CAPTURING CO2 PRODUCED BY CEMENT PLANTS BY USING THE CALCIUM CYCLE**
VERFAHREN ZUR ABSCHEIDUNG VON CO2 AUS ZEMENTFABRIKEN MIT CALCIUM-ZYKLUS
PROCÉDÉ DE CAPTURE DU CO2 PRODUIT PAR DES INSTALLATIONS DE PRODUCTION DE CIMENT EN UTILISANT LE CYCLE DU CALCIUM

(43) Date of publication of application: 13.06.2012
(73) Proprietor: Cemex Research Group AG, 2555 Brügg bei Biel (CH)
(72) Inventor: TREVINO VILLAREAL, Luis, CH-2562 Port (CH); MARTINEZ VERA, Enrique Ramon, Nuevo Leon (MX)
(74) Representative: Novagraaf Technologies
(86) International application number: PCT/EP2009/005623
(87) International publication number: WO 2011/015207

(56) References cited:
- US-A1- 2006 093 540
- A.BOSOAGA,O.MASEK,J.E.OAKEY: "CO2 Capture Technologies for Cement Industry" ENERGY PROCEDIA, vol. 1, no. 1, February 2009 (2009-02), pages 133-140, XP002554169
- T.WEIMAER,R.BERGER,C.HAWTHORNE,J.C.ABANADE S: "Lime enhanced gasification of solid fuels: Examination of a process fro silmutaneous hydrogen production and CO2 capture" FUEL, vol. 87, 2008, pages 1678-1686, XP002554170
- N.RODRIGUEZ,M.ALONSO,G.GRASA,J.CARLOS ABANADES: "Process for Capturing CO2 arising from the calcination of the CaCO3 used in Cement Manufacture" ENVIRON.SCI.TECHNOL., vol. 42, 2008, pages 6980-6984, XP002554171

## Description

### BACKGROUND OF THE INVENTION

### A. FIELD OF THE INVENTION

The present invention is related to methods for capturing the CO2 produced by cement production plants, and more particularly with a method for capturing CO2 produced by cement production plants by integrating the process known as calcium cycle to the cement plant.

### B. DESCRIPTION OF THE RELATED ART

The atmospheric pollution in one of the most serious problems caused by the general industry and has a great impact in our planet's ecosystem. Said problem is mostly caused by the CO2 emissions, which is a well know cause of the global warming.

Specifically, the cement production plants release huge quantities of CO2 to the atmosphere as a result of the combustion of fuels used to heat the kilns where the transformation of limestone, clay, and iron ore which is generally called "raw meal", into a cementitious material called clinker which is subsequently transformed into cement.

In order to carry out said transformation, the following steps must be performed: preheating the raw meal; calcining the raw meal in which the CO2 is removed from the limestone and finally, submit the material to a clinkerization process for obtaining the clinker.

Each step produces CO2 intensively in accordance with the following: in the first and third steps, the CO2 is produced by the combustion of fossil fuels and/or alternative fuels such as tires, industrial waste, wood chips, etc. used to generate meal, and in the second step the CO2 is produced by the calcining of limestone.

The chemical reactions producing CO2 which are carried out inside a cement kiln are the following:
Carbon combustion contained in the fuels:

   C + 02→ CO2
Calcium carbonate calcining contained in the limestone:

   CaCO3→ CaO + CO2

In a cement kiln, approximately, the 65% of the CO2 is produced by calcination processes; therefore, cement kilns are known to be very intensive CO2 producers.

In view of the devastating effects caused by the atmospheric pollution in our planet, the most evident being the global warming, it is necessary to found methods for capturing and eventually sequester the CO2. Said operation is also called carbon sequestration, in which the CO2 is captured before contacting the atmosphere.

The use calcium cycle based processes has been for instance described by US5520894, US2004129181A1 , US2006093540A1 or WO2006113673. All these documents disclose detailed aspect of the CO2 capture technique in relation with conventional exhaust gases cleaning.

The publication A. Bosoaga et al. CO2 Capture Technologies for Cement Industry, Energy Procedia 1, 2009, 133-140 and the publication T. Weimer et al. Lime enhances gasification of solid fuels: examination of a process for simultaneous production and CO2 capture Fuel 87, 2008, 1678-1686. However, neither one discloses the use of raw meal and/or Cement Kiln Dust (CKD).

In view of the above referred necessities, the applicant developed a method for capturing CO2 comprising the integration of the process known as calcium cycle to a cement plant in order to totally capture the CO2 produced by said cement plant and simultaneously raising the productivity of the cement plant. The above referred integration is carried out by using the cement plant raw materials and sub products in the calcium cycle plant and by using the calcium cycle plant sub products and residual energy in the cement plant.

The advantages of the synergy between the calcium cycle process and a cement production plant are very important, since in first place it is achieved the capture of CO2 produced by the cement plant, in second place the raw materials of the cement plant can be used as a make up in the calcium cycle process in third the discharge calcium oxide (purged stream) of the CO2 capture equipment can be used a raw material for the cement production, presenting the advantages that it will no longer liberate CO2 during the cement manufacturing process and in forth place, the energy produced by the exothermic reactions of the calcium cycle process can be used for producing steam for moving an electrical generator for producing electricity which may be used for covering the needs of the cement production plant.

### SUMMARY OF THE INVENTION

It is therefore a main objet of the present invention to provide a method for capturing CO2 produced by cement production plants, comprising the integration of the process known as calcium cycle to the cement plant.

It is another main object of the present invention to provide a method of the above referred nature in which the raw materials and sub products of the cement plant are used by the calcium cycle and vice versa, thus raising the productivity of the cement plant.

It Is a further object of the present invention to provide a method of the above referred nature in which the energy produced by the exothermic reactions of the calcium cycle process can be used for producing steam for moving ah electrical generator for producing electricity which may be used for covering the needs of the cement production plant.

These and other objects and advantages of the method for capturing CO2 produced by cement plants by using the calcium cycle of the present invention will become apparent to those persons having an ordinary skill in the art, from the following detailed description of the embodiments of the invention which will be made with reference to the accompanying drawings.

### BRIEF DESCRIPTION OF THE DRAWING

Figure 1 is a scheme of a cement plant working in accordance with a first embodiment of the method of the present invention.
Figure 2 is a scheme of a cement plant working in accordance with a second embodiment of the method of the present invention.
Figure 3 Is a scheme of a cement plant working in accordance with a third embodiment of the method of the present invention.

### DETAILED DESCRIPTION OF THE INVENTION

The method for capturing CO2 produced by the kilns of a cement production plant using the calcium cycle of the present invention, will now be described making reference to a common cement production plant and to its common production method, to the process known in the state of the art known as calcium cycle and to the accompanying drawings.

### Conventional process for the production of cement

According to the invention, the method for capturing CO2 produced by cement plants by using the calcium cycle method wherein the cement is produced by the cement plant by the following method: grinding of raw materials comprising limestone, clay, and iron ore; homogenizing the raw materials in order to produce a raw meal; preheat the raw meal in the preheater section of a cement kiln in order to produce a preheated raw meal; calcining the preheated raw meal in the calcining section of the cement kiln in order to produce a calcined raw meal; feed said calcined raw meal into a rotary kiln in order to produce a clinker; cooling the clinker and feeding it to a mill in order to mix the clinker with gypsum and produce cement, wherein the cement kiln calciner section and rotary kiln produce combustion gases which are cooled and have a content of between a 15 to 30% of CO2 and unreacted raw meal containing CaCO3 which is filtered from the gas; and wherein the calcium cycle method comprise: contacting said combustion gases containing CO2 with a solid stream having a high CaO content inside a first fluidized bed reactor in order to produce an exothermic reaction between the CO2 and the CaO for producing a solid-gas mixture comprised by a CaCO3 stream and a gaseous stream having a CO2 content ; feeding said solid-gas stream to a cyclone for separating the solids from the gaseous stream and obtaining CaC03 solids and a hot gaseous having a CO2 content; feeding the CaC03 solids into a second fluidized bed reactor to which it is provided heat by means of a combustion reaction, in order to decarbonate the CaC03 and produce a solid-gas mix comprised by a solid CaO stream and a gas stream comprised mainly by hot CO2 coming from the gaseous stream leaving the cement plant and from the combustion reaction that provides heat to second fluidized bed; feeding the solid CaO stream and hot CO2 stream into a second cyclone in order to separate the solids from the hot CO2 and produce a hot CO2 stream separated from a solid CaO stream; and recycling the CaO to the first fluidized bed reactor, wherein the method of the present invention comprise: feeding the combustion gases produced by the calciner section and by the rotary kiln of the cement production plant to the first fluidized bed reactor of the calcium cycle method; feeding the solid CaO stream separated by the second cyclone to the first fluidized bed reactor; purging an amount of the CaO separated by the second cyclone when the capacity of the CaO to react with the CO2 drops, and feeding it directly to the cement plant rotary kiln; and making up fresh CaO to the second fluidized bed reactor of the calcium cycle method and in which the make up of fresh CaO to the second fluidized bed comprises a mix obtained by any combination of limestone, unreacted raw meal filtered from the combustion gases produced by the cement plant (CKD) and cement raw meal taken for instance directly from a cement plant silo.

Advantageously, the CaO is purged when the temperature produced by the exothermic reaction between CO2 and CaO drops below 650°C.

Advantageously, the make up of fresh CaO to the second fluidized bed comprises limestone.

Advantageously, the make up of fresh CaO to the second fluidized bed comprises cement raw meal taken for instance directly from a cement plant silo.

Advantageously, the make up of fresh CaO to the second fluidized bed comprises unreacted raw meal filtered from the combustion gases produced by the cement plant (CKD).

Advantageously, the fresh CaO is continuously added to the second fluidized bed and wherein the amount of fresh CaO added during a predetermined period of time is between 4 to 10% of the amount of raw meal feed to the pre-heater during said predetermined period of time.

Advantageously, the CaO separated by the second cyclone when the capacity of the CaO to react with the CO2 drops is continuously purged and wherein the amount of CaO purged during a predetermined period of time is between 2 to 20% of the amount of raw meal feed to the pre-heater during said predetermined period of time.

Advantageously, the heat recuperated from the first fluidized bed reactor, from the hot gases from the two cyclones and from the CaO purge stream in the calcium cycle method is used for producing steam for moving an electric generator and producing electricity which is used for covering the needs of the cement plant.

Advantageously, the CO2 stream exiting the second cyclone is sequestered by its injection in wells for the enhanced oil recovery.

Advantageously, the CO2 stream exiting the second cyclone is sequestered by its injection in subterranean geological reserves in the ocean as well as in land.

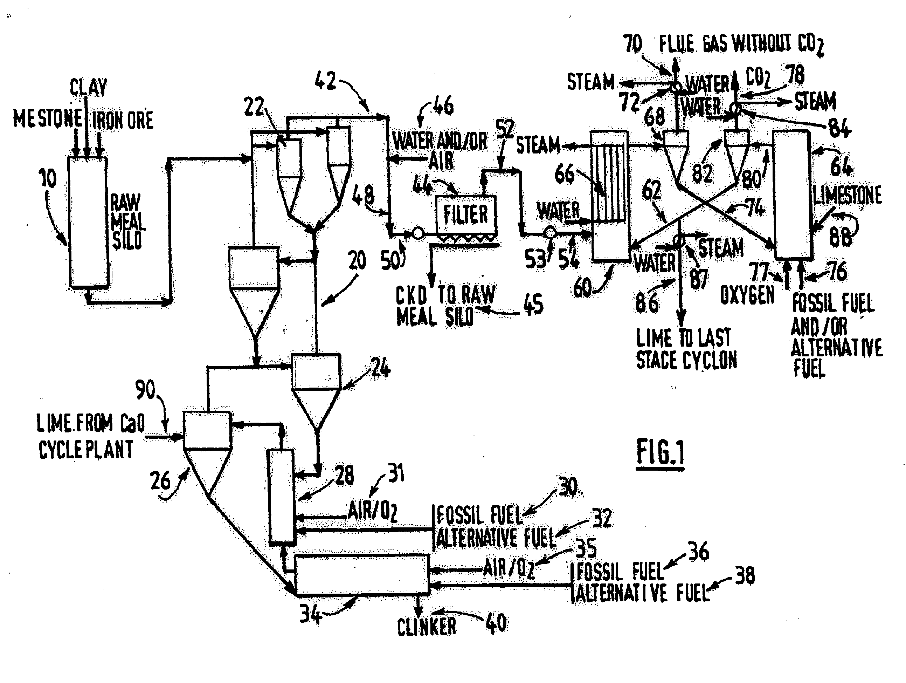

Referring to Figure 1, the conventional method for the production of cement begins with the grinding of the raw materials comprising limestone, clay, and iron ore. Those raw materials are finely grinded In a raw materials mill and feed to a homogenization silo in the proportions required for the production of cement.

Once the raw material Is finely grinded and homogenized, it is called raw meal, which is feed to the pre-heating section 20 of a cement kiln. Said section which is called pre-heater comprises typically a series of three to six interconnected cyclones.

The raw meal is fed to the entrance of the first cyclone 22 and flows downward aided by the gravity countercurrently to an upstream hot combustion gas current in order to preheat the raw meal and complete the first step in the production of the clinker.

The calciner 28 is located between the penultimate 24 and the last 26 cyclone, in which it is carried approximately a 90% of the limestone calcination reaction. The calcination is an endothermic reaction In which the heat is provided by the combustion of a fossil fuel 30 and/or an alternative fuel 32 in the presence of air and/or oxygen 31 which is feed to the base of the calciner 28. Said fuel may be in a solid form such as coal and petroleum coke, liquid such as fuel oils or gaseous such as natural gas. A part of said energy may be alternatively provided by alternative fuels such as tires, wood chips, industrial waste, etc.

Inside the calciner 28 it is carried out the second step in the production of clinker at a typical operation temperature of between 850 and 900°C.

The decarbonated raw meal is then fed to the last cyclone and then two an end of the rotary kiln 24 In which, it is carried out the clinkerization process, which is the last step for the production of the clinker.

The clinkerization process is carried out at a temperature of between 1500 and 1600 °C, and the required energy is provided by the combustion of a solid, liquid or gaseous fuel or mixtures thereof In the presence of air and/or oxygen 35, including alternative fuels comprising the same alternative fuels previously described for the calciner 34. Said fuels are feed to the rotary kiln at the opposite end In which the decarbonated raw meal Is feed.

The clinker 40 produced In the rotary kiln Is cooted and feed to a mill in which It is mixed with gypsum and transformed into cement.

### Emissions of the conventional process for the production of cement

The flue gases from the calciner 28, and from the rotary kiln 34 , which includes the CO2 produced by calcinations, flow upward countercurrently to a downward stream of raw meal. The gases that exit from the first cyclone 22 have a temperature of between 250 to 350 °C. Said gases have high dust content, and therefore it is necessary to pass the gases trough a filter 44 in order to remove the dust. Said dust is known as Cement Kiln Dust (CKD) 45. In order to protect the filtering elements of filter 44, it is necessary to cool the gases to a temperature of less than 300 °C. Said cooling is carried out by water or air injection 46. The cooled gases 48 flow to an induced draft fan (IDF) 50 which provides the necessary energy to the gases for flowing through the kiln 34 and the cyclones of pre-heater 20.

Normally the cooled and cleaned gases 52 exiting from the filter 44 are sent to a stack (not shown) and liberated to the atmosphere. Said gases have a content of between 15 to 30% of CO2 depending on the type of fuels used in the cement process.

The CKD 45 collected from the filter 44 is recycled to a raw meal silo 10. The recycled amount of CKD is of between 5 to 10% of the total amount of raw meal feed to the kiln. Said gases contain between 15 to 30% of CO2 depending on the fuels used in the cement process.

### Adaptation of the Calcium cycle to the cement production plant

In accordance with the above, the method of the present invention comprises connecting to the cement plant, a calcium cycle plant for capturing the CO2 by feeding the combustion gases 52 exiting from the filter 44 by means of a forced draft fan 53 for producing a stream which is feed to a lower end of a first fluidized bed reactor 60 in the calcium cycle plant, in which the gases are contracted with a solid stream having a high CaO content coming from a second fluidized bed reactor 64.

In said first reactor 60 which is called carbonator, the CaO contained in the solid stream 62 reacts with the CO2 contained in the gas leaving filter 44 in accordance with the following reaction:

CO2 + CaO → CaCO3

Said reaction is inverse to the calcination that is carried out in the cement plant. In accordance with said reaction, the CO2 contained in the gases is solidified by reacting with the CaO contained in the solid stream 62 and transformed into CaCO3.

Said reaction is exothermic and occurs at a temperature between 600 and 700°C, preferably at 850 °C. In order to control the operating temperature of said first reactor 60, it is necessary to continuously remove the heat produced by the above referred reaction by means of a water cooling system comprised by a plurality of coils 66 contacting the walls of the first reactor walls 60 or by any other suitable heat interchanging apparatus or method. The reaction heat removed from said water cooling system is used to produce steam which alternatively may be used for moving an electric generator for producing electricity.

In such way, approximately, around 80% to 90% of the CO2 produced In the cement plant Is transformed in CaCO3 and the remaining CO2 exits the first reactor as a gas.

### Processing of the CaCO3 for obtaining the captured CO2

The gas and the solid exit the upper end of the first reactor 60 and are feed to a first cyclone 68 in which are separated. The gas 70 exiting sold first cyclone 68 having a low CO2 content of between 1 to 8% and a temperature of between 800 and 700 °C Is feed to a heat exchanger 72. The heat removed form said water cooling system is used to produce steam which alternatively may be used for moving an electricity generator to produce electricity.

The solid exiting from the first cyclone 74 comprising mainly CaCO3, is feed to the lower end of a second fluidized bed reactor 64 in which it is carried out the CaCO3 decarbonation in accordance with the following reaction:

CaCO3 → CaO + CO2

The second reactor 64 is called decarbonator. The decarbonation reaction is an endothermic reaction which is carried out at a temperature of between 850 and 950 °C, and therefore it is necessary to provide energy to said second reactor 64. Said energy is provided by the combustion of a fossil fuel or an alternative fuel in the form of a solid, liquid or gas 76. In order to avoid the introduction of nitrogen in the combustion gases, which will dilute the content of CO2 in the gases exiting from the second reactor 64, the combustion for the second reactor 64 must be carried out with oxygen which is feed by a stream 77. The gases 78 exiting from the second reactor 64 contain a major part of the CO2 produced by the cement plant and the CO2 produced by the combustion carried out in the second reactor 64, Typically the CO2 content in the gases 78 exiting from the second reactor 64 is of between 90 to 99%.

The stream 80 exiting the second reactor 64 is comprised by a gaseous stream containing mainly CO2 and a solid stream containing mainly CaO. Said solid-gas mixture exits from the second reactor 64 by an upper end 80 thereof and it is feed to a second cyclone 82 in which the solid and the gas are separated: the gaseous stream 78, containing mainly CO2 exiting the second reactor 64 at a temperature of between 850 and 950 °C and it is feed to a heat exchanger apparatus 84 in which its sensible heat may be alternatively used to produce steam for moving an electric generator.

The gaseous stream 78 exiting the second cyclone 84 has a CO2 content from 90 to 99% (dry base) which may be sequestered by its injection in oil recuperation wells (enhanced oil recovery -EOR-) or by using any other sequestering technologies such as the injection of CO2 in geological reserves located in the ocean as well as in the land. By such means, the cement plant CO2 emissions are reduced by a 80% thus reducing the emissions of greenhouse gases.

**Cycling of solids products in the Calcium cycle, make up and purge of calcium cycle main reactive**

The solids stream 62 exiting the second cyclone 82 comprising mainly CaO, is fed to the lower end of the first reactor 60 so it can react with the CO2 contained in the gaseous stream 54 exiting the cement plant, thus closing a cycle.

The capacity of the CaO for reacting with the CO2 contained in the cement plant combustion gas begins to drop when the number of carbonation/calcinations cycles carried out in the reactors 60 and 64 increases, that is, when parameters such as the quantity of CaCO3 produced by the reaction drops below a predetermined parameter or when the temperature produced by said exothermic reaction begins to drop below 600°C but preferably 650°C. In order to maintain the reactivity of the CaO flowing in the calcium cycle plant, to react with the CO2, it is necessary to continuously feed said system with a fresh stream of CaO and to continuously purge from the system approximately the same amount of CaO to maintain the balance.

The CaO is purged from the second cyclone 82 exit line connecting the first reactor 60 and said second cyclone 82. Said purge contains mainly CaO comprising decarbonated limestone, which may be fed to a last stage cyclone 26 of the pre-heater 20 and rotary kiln 34 without the need of calcination thus increasing the productivity of the cement kiln and lowering its energy consumption. The CaO purge is fed to a heat exchanger apparatus 87 to recuperate its heat to produce steam for moving an electric generator.

In a first embodiment of the present invention shown in Figure 1, the fresh CaO supply 88 which comprises a mix obtained by any combination of limestone, unreacted raw meal filtered from the combustion gases produced by the cement plant (CKD) and cement raw meal taken for instance directly from a cement plant silo is fed in the form of pulverized limestone, in which the CaCO3 content is higher than a 95%. The limestone is fed to the second fluidized bed reactor 64 in which it is decarbonated together with the CaCO3 coming from the first reactor 60. The solid stream exiting from the second cyclone 82 is comprised by the CaO produced by the calcinations of CaCO3 coming from the first reactor 60 and the CaO produced by the calcinations of fresh limestone supply 88 feed to the second reactor 64.

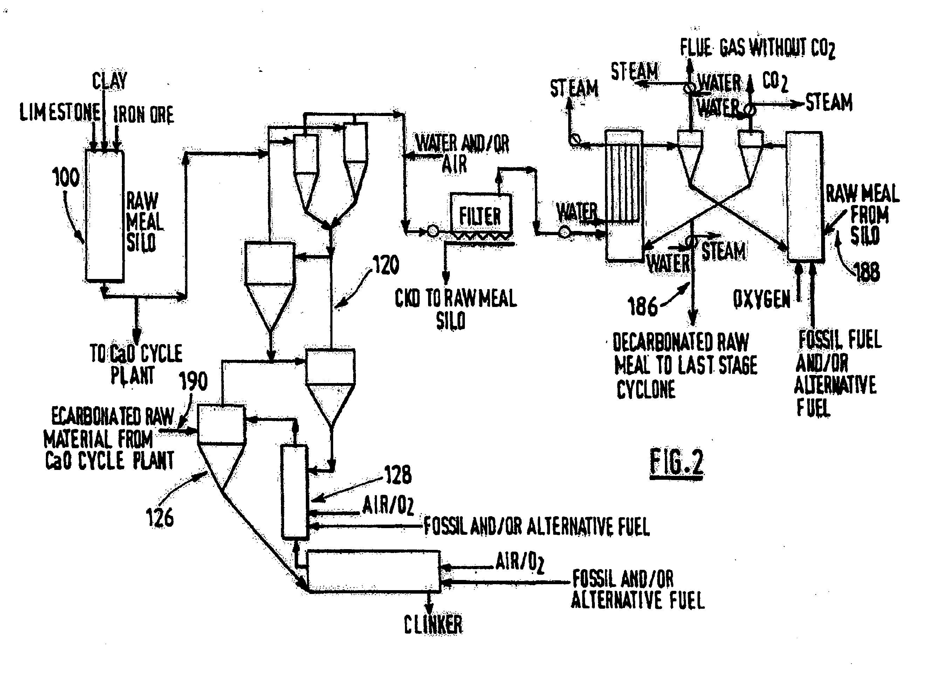

In a second embodiment of the present invention shown in Fig. 2, the fresh CaO supply 188 comprises raw meal directly taken from the cement plant silo 100. The raw meal CaCO3 content is of approximately 70-80% which is lower than the limestone CaCO3 content because the raw meal is comprised of a mixture of limestone, clay and iron ore. Due to its low CaCO3 content, the amount of raw meal that must be fed is greater than the amount of limestone fed in accordance with the first embodiment of the invention. The advantage of feeding raw meal is that the purge stream 186 is comprised by solids having the same chemical composition as the calcined raw meal produced in the cement plant calciner 128, therefore said solids may be directly fed as a stream 190 to the last cyclone 126 of the pre-heater 120. The advantages of this second embodiment can only be seized when the calcium cycle plant is integrated to the cement plant.

Alternatively, the purge stream could also be used in the cement manufacturing process as a raw material added in the raw meal milling step.

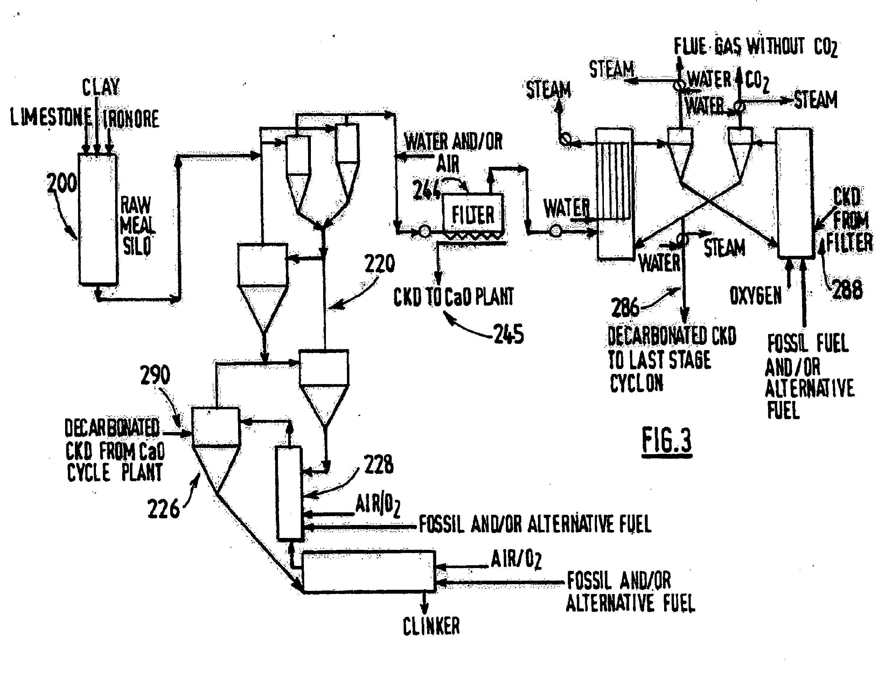

In a third embodiment of the present invention, shown in Fig. 3, the fresh CaO supply 288 comprises CKD directly taken from the stream 245 located at the exit of filter 244. The cement kiln dust (CKD) is comprised by unreacted raw meal having a CaCO3 content of approximately 75%. Due to the low CKD CaCO3 content, the amount of the CKD that must be fed is greater that the amount of limestone fed in accordance with the first embodiment of the invention. The advantage of feeding CKD is that the purge stream 286 is comprised by solids having the same chemical composition as the calcined raw meal produced in the cement plant calciner 228.

The advantages of this third embodiment can only be seized when the calcium cycle plant is integrated to the cement plant.

The amount of fresh CaO to be added in the form of pulverized limestone, raw meal or CKD depends on several factors such as the cement plant production, energy consumption of the cement plant, type of fuel used in the cement and calcium cycle plants, percentage of oxygen in excess present in the calciner, operational temperatures of both calcium cycle plant reactors and amount of CO2 to be captured.

However, the amount of fresh CaO to be added continuously during a predetermined period of time may be quantified in an amount of preferably between 4 to 20%, of the amount of raw meal fed to the pre-heater during said predetermined period of time. In the same way, the amount of CaO purged from the system during said predetermined period of time may be quantified in an amount of preferably between 2 to 20, % of the amount of raw meal fed to the preheater during the same predetermined period of time.

The purge of pulverized CaO is used as raw material by feeding it directly to the last cyclone 226 of preheater 220 thru stream 290 thus increasing the productivity of the cement plant. Furthermore, by recuperating the heat produced in the first reactor, the heat from the gaseous streams leaving the two cyclones and the heat from the CaO purge stream, it is possible to generate the necessary electricity for covering the needs of the cement plant.

Alternatively, the purge streams from all three embodiments could also be used jointly in the cement manufacturing process as a raw material added in the raw meal milling step together with the fresh raw materials (limestone, clay, iron ore, etc.) in order to optimize the cycling process and the use of available sources of fresh CaO stream.

The fresh CaO to be added continuously can also be a mix of the three CaO sources described above (pulverized lime stone, pulverize raw meal or cement kiln dust). Typically, mixes of pulverized limestone and CKD, mixes of CKD and pulverized cement raw meal, mixes of pulverized raw meal and pulverized limestone and mixes all 3 sources together can be used as a fresh CaO stream. In this case, the composition of the purged stream may be different from that of the raw meal. Using the purged stream as a raw material for the cement manufacturing process thus requests an adapted dosage of the other fresh raw material (limestone, clay, iron ore, etc.) that can best be performed by adapting their respective contents before entering the raw meal mill together with the purged stream. Since the chemical compositions of all material streams entering the raw materials mill are know as part as the conventional cement process control, the present invention includes a step of controlling the chemical composition of the purged stream (typically by chemical analysis) in order to adapt all fresh materials streams entering the raw mill to ensure that the cement raw meal composition in constant and meets the chemical composition requirements imposed by the cement manufacturing process.

## Claims

1. A method for capturing CO2 produced by cement plants by using the calcium cycle method wherein the cement is produced by the cement plant by the following method: grinding of raw materials comprising limestone, clay, and iron ore; homogenizing the raw materials in order to produce a raw meal; preheat the raw meal in the preheater section of a cement kiln in order to produce a preheated raw meal; calcining the preheated raw meal in the calcining section of the cement kiln in order to produce a calcined raw meal; feed said calcined raw meal into a rotary kiln in order to produce a clinker; cooling the clinker and feeding it to a mill in order to mix the clinker with gypsum and produce cement, wherein the cement kiln calciner section and rotary kiln produce combustion gases which are cooled and have a content of between a 15 to 30% of CO2 and unreacted raw meal containing CaCO3 which is filtered from the gas; and wherein the calcium cycle method comprise: contacting said combustion gases containing CO2 with a solid stream having a high CaO content inside a first fluidized bed reactor in order to produce an exothermic reaction between the CO2 and the CaO for producing a solid-gas mixture comprised by a CaC03 stream and a gaseous stream having a lower CO2 content ; feeding said solid-gas stream to a cyclone for separating the solids from the gaseous stream and obtaining CaCO3 solids and a hot gaseous having a lower CO2 content; feeding the CaCO3 solids into a second fluidized bed reactor to which it is provided heat by means of a combustion reaction, in order to decarbonate the CaCO3 and produce a solid-gas mix comprised by a solid CaO stream and a gas stream comprised mainly by hot CO2 coming from the gaseous stream leaving the cement plant and from the combustion reaction that provides heat to second fluidized bed; feeding the solid CaO stream and hot CO2 stream into a second cyclone in order to separate the solids from the hot CO2 and produce a hot CO2 stream separated from a solid CaO stream; and recycling the CaO to the first fluidized bed reactor, wherein the method of the present invention comprise: feeding the combustion gases produced by the calciner section and by the rotary kiln of the cement production plant to the first fluidized bed reactor of the calcium cycle method; feeding the solid CaO stream separated by the second cyclone to the first fluidized bed reactor; purging an amount of the CaO separated by the second cyclone when the capacity of the CaO to react with the CO2 drops, and feeding it directly to the cement plant rotary kiln; and making up fresh CaO to the second fluidized bed reactor of the calcium cycle method and in which the make up of fresh CaO to the second fluidized bed comprises a mix obtained by any combination of limestone, unreacted raw meal filtered from the combustion gases produced by the cement plant (CKD) and cement raw meal taken for instance directly from a cement plant silo.

2. A method in accordance with the claim 1, in which the CaO is purged when the temperature produced by the exothermic reaction between CO2 and CaO drops below 650<0>C.

3. A method in accordance with the claim 1, in which the make up of fresh CaO to the second fluidized bed comprises limestone.

4. A method in accordance with the claim 1, in which the make up of fresh CaO to the second fluidized bed comprises cement raw meal taken for instance directly from a cement plant silo.

5. A method in accordance with the claim 1, in which the make up of fresh CaO to the second fluidized bed comprises unreacted raw meal filtered from the combustion gases produced by the cement plant (CKD).

6. A method in accordance with the claim 1 , in which the fresh CaO is continuously added to the second fluidized bed and wherein the amount of fresh CaO added during a predetermined period of time is between 4 to 10% of the amount of raw meal feed to the pre-heater during said predetermined period of time.

7. A method in accordance with the claim 1, in which the CaO separated by the second cyclone when the capacity of the CaO to react with the CO2 drops is continuously purged and wherein the amount of CaO purged during a predetermined period of time is between 2 to 20% of the amount of raw meal feed to the pre-heater during said predetermined period of time.

8. A method in accordance with the claim 1, in which the heat recuperated from the first fluidized bed reactor, from the hot gases from the two cyclones and from the CaO purge stream in the calcium cycle method is used for producing steam for moving an electric generator and producing electricity which is used for covering the needs of the cement plant.

9. A method in accordance with claim 1, in which the CO2 stream exiting the second cyclone is sequestered by its injection in wells for the enhanced oil recovery.

10. A method in accordance with claim 1 , in which the CO2 stream exiting the second cyclone is sequestered by its injection in subterranean geological reserves in the ocean as well as in land.

## Patentansprüche

1. Verfahren zur Abscheidung von CO2 aus Zementwerken mit Hilfe des Calcium-Zyklus-Verfahrens, wobei der Zement durch das Zementwerk nach dem folgenden Verfahren hergestellt wird: Mahlen der Rohstoffe, die Kalkstein, Ton und Eisenerz umfassen; Homogenisieren der Rohstoffe, um ein Rohgemisch zu erhalten; Vorheizen des Rohgemischs im Vorwärmerbereich eines Zementofens, um ein vorgewärmtes Rohgemisch zu erhalten; Kalzinieren des vorgewärmten Rohgemischs in dem Kalzinierungsbereich des Zementofens, um ein kalziniertes Rohgemisch zu erhalten; Einspeisung des kalzinierten Rohgemischs in einen Drehrohrofen, um Klinker zu erhalten; Abkühlen des Klinkers und Zuführen zu einer Mühle, um den Klinker mit Gips zu mischen und Zement herzustellen, wobei der Kalzinierungsbereich des Zementofens und der Drehrohrofen Verbrennungsgase produzieren, die gekühlt werden und einen Gehalt von 15 bis 30% CO2 und nicht umgesetztes Rohgemisch mit CaCO3 aufweisen, das aus dem Gas gefiltert wird; und wobei das Calcium-Zyklus-Verfahren umfasst: die CO2-haltigen Verbrennungsgase werden mit einem Feststoffstrom mit einem hohen CaO-Gehalt in einem ersten Wirbelschichtreaktor in Kontakt gebracht, um eine exotherme Reaktion zwischen dem CO2 und dem CaO zu erhalten, um ein Feststoff-Gas-Gemisch herzustellen, das von einem CaCO3-Strom und einem Gasstrom mit einem niedrigeren CO2 umfasst wird; Einspeisen des Feststoff-Gas-Stroms in einen Zyklon zur Abtrennung der Feststoffe aus dem Gasstrom und zum Erhalt der CaCO3-Feststoffe und eines heißen Gasstroms mit einem niedrigeren CO2-Gehalt; Einspeisung der CaCO3-Feststoffe in einen zweiten Wirbelschichtreaktor, dem Wärme mittels einer Verbrennungsreaktion zur Verfügung gestellt wird, um CaCO3 zu decarbonisisieren und eine Feststoff-Gas-Mischung zu erhalten, die von einem CaO-Feststrom und einem Gasstrom umfasst wird, der vor allem von heißem CO2 umfasst wird, das aus dem von dem Zementwerk abgeschiedenen Gasstrom und aus der Verbrennungsreaktion kommt, die dem zweiten Wirbelschichtbett Wärme liefert; Einspeisung des Feststoff-CaO-Stroms und des heißen CO2-Stroms in einen zweiten Zyklon, um die Feststoffe von dem heißen CO2 abzutrennen und einen, von einem festen CaO-Strom getrennten, heißen CO2-Strom zu erhalten; und Rückführen des CaO zu dem ersten Fließbettreaktor, wobei das Verfahren der vorliegenden Erfindung umfasst: Zuführen der von dem Kalzinatorbereich und dem Drehrohrofen des Zementwerks erzeugten Verbrennungsgase zu dem ersten Wirbelschichtreaktor des Calcium-Zyklus-Verfahrens; Zuführen des von dem zweiten Zyklon abgeschiedenen Feststoff-CaO-Stroms zu dem ersten Wirbelschichtreaktor; Abführen einer durch den zweiten Zyklon abgeschiedenen CaO-Menge, wenn die Fähigkeit des CAO mit dem CAO2 zu reagieren sinkt, und direkte Einspeisung in den Drehrohrofen des Zementwerks; und Auffüllen mit frischem CaO im zweiten Wirbelschichtreaktor des Calcium-Zyklus-Verfahrens und wobei das Auffüllen mit frischem CaO im zweiten Wirbelschichtbett eine Mischung umfasst, die durch eine beliebige Kombination von Kalkstein, nicht umgesetztem, aus den Verbrennungsgasen des Zementwerks gefiltertem Rohgemisch und zum Beispiel direkt aus einem Zementwerksilo entnommenem Zementrohgemisch erhalten wird.

2. Verfahren gemäß dem Anspruch 1, in dem das CaO abgeführt wird, wenn die durch die exotherme Reaktion zwischen CO2 und CaO erhaltene Temperatur unter 650 °C fällt.

3. Verfahren gemäß dem Anspruch 1, in dem das Auffüllen mit frischem CaO in dem zweiten Wirbelschichtbett Kalkstein umfasst.

4. Verfahren gemäß dem Anspruch 1, in dem das Auffüllen mit frischem CaO in dem zweiten Wirbelschichtbett Zementrohgemisch umfasst, das zum Beispiel direkt aus einem Zementwerksilo entnommen wird.

5. Verfahren gemäß dem Anspruch 1, in dem das Auffüllen mit frischem CaO in dem zweiten Wirbelbett nicht umgesetztes, aus den Verbrennungsgasen des Zementwerks gefiltertes Rohgemisch umfasst.

6. Verfahren gemäß dem Anspruch 1, bei dem das zweite Wirbelbett kontinuierlich mit frischem CaO aufgefüllt wird, und wobei die im Laufe einer vorbestimmten Zeitdauer zugefügte Menge an frischem CaO 4 bis 10 % der in der vorbestimmten Zeitdauer in den Vorhitzer eingespeisten Rohgemischmenge entspricht.

7. Verfahren gemäß dem Anspruch 1, in dem das von dem zweiten Zyklon abgeschiedene CaO kontinuierlich abgeführt wird, wenn die Fähigkeit des CaO mit dem CO2 zu reagieren sinkt, und wobei die Menge an CaO, die während einer vorgegebenen Zeitdauer abgeführt wird, 2 bis 20 % der Menge des Rohgemischs beträgt, die in den Vorhitzer während der vorbestimmten Zeitdauer eingespeist wird.

8. Verfahren gemäß dem Anspruch 1, bei dem die aus dem ersten Wirbelschichtreaktor, aus den heißen Gasen aus den beiden Zyklonen und aus dem CaO-Abführstrom in dem Calcium-Zyklus-Verfahren zurückgewonnene Wärme zur Erzeugung von Dampf zum Antrieb eines Elektrogenerators und zur Stromerzeugung zur Deckung des Bedarfs des Zementwerks verwendet wird.

9. Verfahren nach Anspruch 1, bei dem der CO2-Strom aus dem zweiten Zyklon zur Injektion in Brunnen für die verbesserte Ölgewinnung abgezweigt wird.

10. Verfahren nach Anspruch 1, in dem der CO2-Strom aus dem zweiten Zyklon zur Injektion in unterirdische geologische Reserven sowohl im Meer als auch auf dem Land abgezweigt wird.

## Revendications

1. Procédé pour la capture du CO2 produit par les cimenteries en utilisant le procédé du cycle du calcium où le ciment est produit par la cimenterie par le procédé suivant : broyage des matières premières comprenant du calcaire, de l'argile, et du minerai de fer; homogénéisation des matières premières afin de produire une farine crue ; préchauffage de la farine crue dans la section de préchauffage d'un four à ciment afin de produire une farine crue préchauffée ; calcination de la farine crue préchauffée dans la section de calcination du four à ciment afin de produire une farine crue calcinée ; introduction de ladite farine crue calcinée dans un four rotatif afin de produire un clinker ; refroidissement du clinker et son introduction dans un moulin afin de mélanger le clinker avec du gypse et produire le ciment, où la section de calcination du four à ciment et le four rotatif produisent des gaz de combustion qui sont refroidis et ont une teneur comprise entre 15 et 30% de CO2 et de farine crue n'ayant pas réagi contenant du CaC03 qui est filtrée à partir du gaz ; et où le procédé du cycle du calcium comprend : la mise en contact desdits gaz combustion contenant le CO2 avec un flux solide ayant une teneur élevée en CaO à l'intérieur d'un premier réacteur à lit fluidisé afin de produire une réaction exothermique entre le CO2 et le CaO pour la production d'un mélange solide-gaz constitué par un flux de CaC03 et un flux de gaz ayant une faible teneur en CO2 ; introduction dudit flux solide-gaz dans un cyclone pour la séparation des solides du flux de gaz et l'obtention des solides CaC03 et un gaz chaud ayant une faible teneur en CO2 ; introduction des solides CaC03 dans un second réacteur à lit fluidisé dans lequel la chaleur est fournie au moyen d'une réaction de combustion, afin de décarbonater le CaC03 et produire un mélange solide-gaz constitué d'un flux solide de CaO et d'un flux de gaz constitué principalement de CO2 chaud provenant du flux de gaz quittant la cimenterie et de la réaction de combustion qui fournit de la chaleur au second lit fluidisé ; introduction du flux solide de CaO dans le flux de CO2 chaud dans un second cyclone afin de séparer les solides à partir du CO2 chaud et produire un flux de CO2 chaud séparé du flux solide de CaO ; et recyclage du CaO dans le premier réacteur à lit fluidisé, où le procédé de la présente invention comprend : introduction des gaz de combustion produits par la section de calcination et par le four rotatif de l'usine de production de ciment dans le premier réacteur à lit fluidisé du procédé du cycle du calcium ; introduction du flux solide de CaO séparé par le second cyclone dans le premier réacteur à lit fluidisé ; purge une quantité du CaO séparé par le second cyclone quand la capacité du CaO à réagir avec le CO2 tombe, et son introduction directement dans le four rotatif de la cimenterie; et la composition du CaO frais dans le second réacteur à lit fluidisé du procédé du cycle du calcium et dans lequel la composition de CaO frais dans le second lit fluidisé comprend un mélange obtenu par toute combinaison de calcaire, farine crue n'ayant pas réagi filtrée à partir des gaz de combustion produits par la cimenterie (CKD) et la farine crue de ciment prise par exemple directement à partir d'un silo de la cimenterie.

2. Procédé selon la revendication 1, où le CaO est purgé quand la température produite par la réaction exothermique entre le CO2 et le CaO tombe sous 650°C.

3. Procédé selon la revendication 1, où la composition de CaO frais dans le second lit fluidisé comprend du calcaire.

4. Procédé selon la revendication 1, où la composition de CaO frais dans le second lit fluidisé comprend de la farine crue de ciment prise par exemple directement à partir d'un silo de la cimenterie.

5. Procédé selon la revendication 1, où la composition du CaO frais dans le second lit fluidisé comprend de la farine crue n'ayant pas réagi filtrée à partir des gaz de combustion produits par la cimenterie (CKD).

6. Procédé selon la revendication 1, où le CaO frais est continuellement ajouté dans le second lit fluidisé et où la quantité de CaO frais ajoutée durant une période de temps prédéterminée est comprise entre 4 et 10% de la quantité de farine crue introduite dans le préchauffeur durant ladite période de temps prédéterminée.

7. Procédé selon la revendication 1, où le CaO séparé par le second cyclone quand la capacité du CaO à réagir avec le CO2 tombe est continuellement purgé et où la quantité de CaO purgée durant la période de temps prédéterminée est comprise entre 2 et 20% de la quantité de farine crue introduite dans le préchauffeur durant ladite période de temps prédéterminée.

8. Procédé selon la revendication 1, où la chaleur récupérée à partir du premier réacteur à lit fluidisé, à partir des gaz chauds à partir des deux cyclones et à partir du flux de purge du CaO dans le procédé du cycle du calcium est utilisée pour produire un flux pour alimenter un générateur électrique et produire de l'électricité qui est utilisée pour couvrir les besoins de la cimenterie.

9. Procédé selon la revendication 1, où le flux de CO2 sortant du second cyclone est séquestré par son injection dans des puits pour la récupération augmentée de pétrole.

10. Procédé selon la revendication 1, où le flux de CO2 sortant du second cyclone est séquestré par son injection dans des réserves géologiques souterraines dans l'océan ainsi que dans les terres.
